(19) Europäisches Patentamt
European Patent Office
Office européen des brevets

(11) Publication number: **0 015 282**
**B1**

(12) **EUROPEAN PATENT SPECIFICATION**

(45) Date of publication of patent specification: **13.06.84**

(51) Int. Cl.[3]: **G 01 J 3/30**

(21) Application number: **79900799.2**

(22) Date of filing: **02.07.79**

(86) International application number:
**PCT/US79/00478**

(87) International publication number:
**WO 80/00190 07.02.80 Gazette 80/3**

(54) **Method of generating nitrogen for flameless emission spectroscopy and a system using the method.**

(30) Priority: **03.07.78 US 921396**

(43) Date of publication of application:
**17.09.80 Bulletin 80/19**

(45) Publication of the grant of the patent:
**13.06.84 Bulletin 84/24**

(84) Designated Contracting States:
**CH DE FR GB**

(56) References cited:
**US - A - 3 242 798**
**US - A - 3 843 257**
**US - A - 4 150 951**

**C.A. JACOBSON: "Encyclopedia of Chemical reactions", vol. V, 1953, Reinhold Publishing Corp. New York, USA**

(73) Proprietor: **BECKMAN INSTRUMENTS, INC.**
**2500 Harbor Boulevard**
**Fullerton California 92634 (US)**

(72) Inventor: **ANDERSON, Robert, J.**
**17822 Beckley Circle**
**Villa Park, CA (US)**

(74) Representative: **Wotherspoon, Graham et al,**
**FITZPATRICKS 4 West Regent Street**
**Glasgow G2 1RS Scotland (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 015 282 B1**

## Description

*Background of the Invention*

Field of the Invention

The present invention relates to flameless emission spectroscopy and, more particularly, to a method of generating nitrogen for use in flameless emission spectroscopy and a system using the method.

Description of the Prior Art

A variety of methods and systems exist for the quantitative and qualitative detection and analysis of atomic and molecular species in samples, such as body fluids. One such method and system involves the excitation of the sample atoms through collision with an active metastable gaseous species in a Lewis-Rayleigh afterglow, the excited atoms then emitting characteristic wavelengths of light as they relax back to their ground state. Specifically, the sample to be analyzed is introduced into a gas stream containing an excess of an active metastable species of nitrogen gas whereupon the material, if atomic, is rapidly and repeatedly excited or, if molecular, is decomposed and certain component atoms of the molecule are excited, the excited species emitting characteristic wavelengths of light. The wavelength and intensity of the emitted light are determinative respectively of the identity and concentration of the atoms of the different elements present.

There are at least two advantages to this flameless emission technique. The first of these is that upon relaxation to the ground state, the atoms may collide again with an active nitrogen molecule, providing that the active nitrogen is present in excess, thereby reexciting the atom with a subsequent reemission of a characteristic photon. The second advantage is that in contrast to flame photometry or atomic absorption photometry or other techniques, the background radiation in the Lewis-Rayleigh afterglow region is extremely low in the visible and ultraviolet, permitting the characteristic emission spectra to be observed against a black background. These two advantages combine to make this technique extremely sensitive and capable of extremely good linearity. As a result, a number of systems have been developed utilizing this technique.

The generation of active nitrogen is accomplished in a microwave discharge. Specifically, the technique requires the injection of gaseous nitrogen into a microwave cavity coupled to a microwave generator as well as the mixing of the active nitrogen stream with the sample stream in the vapor phase. A suitable sample introduction system for generating the sample stream in the vapor phase is known which requires nitrogen in gaseous form which is typically received from a gas bottle. While providing the gas in this form generally is acceptable, there are circumstances when it is not. Particularly for clinical applications, it is not desirable to have a tank of nitrogen present, simply because of the danger associated therewith. For this reason, clinicians have been reluctant to utilize the flameless emission technique, in spite of its many advantages.

It is therefore an object of the present invention to provide a method of and apparatus for generating nitrogen or other noble gas for use in flameless emission spectroscopy.

It is a further object of the present invention to provide a flameless emission spectroscopic system which eliminates the necessity for a tank of nitrogen.

*Summary of the Invention*

According to the present invention as defined in claims 1 and 6, there is provided a method and apparatus for generating nitrogen for use in flameless emission spectroscopy is generated in a manner which eliminates the necessity for a tank of nitrogen. In this manner, flameless emission spectroscopy becomes suitable for use in clinical applications. Briefly, it is the teaching of the present invention in its preferred form to add a nitrogen containing, water soluble compound to a suitable diluent, such as water, and to aspirate this solution onto a hot filament in the reaction chamber at reduced pressure. The compound selected would be capable of releasing nitrogen molecules at high temperatures and at reduced pressures. A variety of nitrogen compounds are suitable for this purpose, in particular hydrazine and urea and their respective families of related compounds. In this manner, the nitrogen will be generated internally of the reaction chamber and the clinician will only have to deal with the compound in solid form.

It is known from US—A3 843 257 to provide, in a flameless emission spectroscopy apparatus, a heatable filament positioned upstream of the microwave cavity. However, this heatable filament is provided for the purpose of volatilising a solid or liquid sample placed thereon, and this prior document does not suggest in any way that the heatable filament can be used in conjunction with a diluent having a gas-releasing compound dissolved therein.

*Brief Description of the Drawings*

The sole figure is a partially schematic, partially sectional side view of a flameless emission spectroscopic system for analyzing the elemental or molecular composition of a sample incorporating a method and apparatus for generating nitrogen in accordance with the teachings of the present invention.

*Description of the Preferred Embodiment*

Referring now to the drawing, there is shown a generally known system, designated 10, for flameless emission spectroscopy. System 10 includes a reaction chamber 11 preferably formed from a length of fused silica tubing 12 which is maintained at some low pressure, preferably between 1 and 10 torr, by means of a vacuum pump 13 connected to one end of tubing 12 by a length of rubber tubing 14. The length of tubing 12 is insignificant and the diameter may be approximately 10 mm. A microwave chamber 15 is formed within tubing 12 by surrounding tubing 12 with a microwave cavity 16 which is coupled to a microwave generator 17, the latter preferably operating at 2.45 GHz.

In a conventional system, nitrogen or some other suitable inert gas is fed into chamber 15 where energy is coupled thereto from generator 17, causing the molecules to be raised to an active electronic excited state. The amount of active nitrogen produced is a function of microwave power, pressure, flow rate, and nitrogen purity. If a sample is now forced into the gas phase and mixed with the nitrogen, the material, if atomic, is rapidly and repeatedly excited, or, if molecular, is disassociated into its component atoms and these atoms are rapidly and repeatedly excited. In either case, the atoms present in the sample emit light at specific wavelengths whereupon the wavelengths are determinative of the identity of the atoms and the intensity of the emitted light at each wavelength is determinative of the concentration of the atom present.

At a fixed distance of approximately 5—30 cm downstream of microwave cavity 16, in the area known as the Lewis-Rayleigh afterglow region, the fluorescence is monitored to determine the wavelengths and corresponding intensities to establish the identity and concentrations of the elements present. The emitted light may be collected by a collection optics system, generally designated 20, which focuses the light into a detection system 21, that measures the light intensity at the wavelengths of interest.

A typical detection system, known to those skilled in the art, consists of collection lenses, a monochromator, a vidicon detector, and a multichannel analyzer. Optics 20 focuses the light from within chamber 11 onto the input slit of the monochromator. The vidicon detector is located in the focal plane of the monochromator grating, at the normal location of the output slit. The vidicon detector has an array of small photodiodes, each of which therefore views a small portion of the spectrum. The multichannel analyzer displays an output whose amplitude is proportional to the light intensity on each of the photodiodes, resulting in a spectrum of the amplitude of the light intensity as a function of wavelength. Since each of the gaseous species emits light at a specific wavelength, by monitoring the amplitude of the intensity at a specific photodiode, or by summing over several diodes, the concentration of the various species can be determined.

Since the entire spectrum is observed continuously during the passage of the sample through reaction chamber 11, the concentration of a number of different species can be determined simultaneously, from a single sample, during a short period of time on the order of a few seconds to a minute.

System 10 may be advantageously used to analyze various components in body fluids or other liquids. In the case of a liquid sample, it is necessary to introduce the sample into system 10 in such a way that the molecules are completely disassociated into their atomic components and the atomic components completely vaporized. It is also necessary to introduce nitrogen into chamber 15. For both of these purposes, system 10 includes a sample and gas introduction system, generally designated 30.

In sample and gas introduction system 30, a beaker or other reservoir 31 receives one end of a length of tubing 32, the other end of which is connected to one end of a tiny capillary tube 33. Tube 33 is preferably made from a metallic or ceramic material and has a preferred diameter in the range of from 0.0254 to 0.254 mm (.001 to .01 inches). Tube 33 extends through a plug 34 which extends into the end of tubing 12 opposite from the end connected to pump 13. Thus, the other end of tube 33, the tip, extends into tubing 12. A filament 35 is positioned adjacent the tip of tube 33 so that the liquid flowing from tube 33 impinges upon filament 35. The leads 36 from filament 35 extend through plug 34 for connection to a suitable source of voltage. A pump 37 is preferably connected within tubing 32 for pumping liquid 38 from beaker 31 into capillary tube 33.

With the construction just described, the liquid 38 in beaker 31 is aspirated into extremely small droplets by flowing through tube 33, which has a very small diameter. Upon contacting the heated filament 35, the liquid is instantaneously vaporized.

According to the present invention, system 30 is used to introduce nitrogen into chamber 15. Specifically, a chemical compound is added to liquid 38 which is capable of releasing nitrogen molecules upon contact with heated filament 35 and vaporization into chamber 15 at reduced pressure. A variety of nitrogen compounds are suitable for this purpose, in particular hydrazine and urea and their respective families of related compounds. Both hydrazine and urea are water soluble, stable, and easily handled. Both readily decompose at high temperatures, as will be encountered on hot filament 35, and at reduced pressures. Both decompose to yield nitrogen molecules, while hydrazine has the additional advantage of acting in aqueous solution as an oxygen scavenger in accordance with the following equation:

$$N_2H_4+O_2\rightarrow N_2+2H_2O$$

Other attractive hydrazine related compounds include hydrazine azoimide which is highly desirable due to its high nitrogen content as well as its very high water solubility.

According to the preferred embodiment of the invention, the nitrogen containing compound is diluted in a suitable diluent, such as water, in beaker 31, and this solution is pumped continuously by pump 37 into chamber 15. This provides a constant source of active nitrogen passing into reaction chamber 11. Then, when it is time to run a test, the sample can be added to liquid 38 in beaker 31 and pumped into chamber 15 along with the nitrogen compound.

Evidently, tube 33 and filament 35 must be placed upstream of cavity 16 so that the nitrogen generated when the compound impinges on filament 35 will flow through chamber 15. While the sample under test does not have to be introduced with the nitrogen containing compound, as shown, this is the preferred embodiment since it substantially simplifies the apparatus required for both sample and gas introduction. Furthermore, with the construction shown, the sample is conducted through the discharge in cavity 16. Since the cavity operates at a high frequency, the water in which the sample and the nitrogen containing compound is diluted and the sample itself absorb microwave energy and are instantly vaporized. Furthermore, the energy of the discharge causes the sample molecules to become disassociated into their component atoms.

Upon mixing of the sample gas with the active nitrogen in chamber 15, the excited gaseous species collides with the active nitrogen species to excite the gaseous species. Upon relaxation to the ground state, the gaseous species emits a characteristic photon at specific wavelengths. The emitted light is collected by collection optics 20 which focuses the light into detection system 21.

It is desirable to have an excess of nitrogen over sample in the flameless emission technique since this insures that first order kinetics will prevail and that the signal observed will be linearly related to the concentration of the species to be analyzed. It is also desirable to use the sample at very high dilutions, say on the order of 1,000 to 1, since this simplifies the problem of disassociating the sample in the vapor phase. Both of these objectives are met by utilizing hydrazine, urea, or related compounds at relatively high concentration in the diluent, say on the order of .1 to 1 molar, while the sample is injected into the sample chamber at a 1,000 to 1 dilution. Under these conditions, the ratio of nitrogen molecules to sample would be in the range of $10^3$ to $10^4$.

It can therefore be seen that according to the present invention, there is provided a method of and apparatus for generating nitrogen for use in flameless emission spectroscopy which eliminates the necessity for a tank of nitrogen or other gas. In this manner, flameless emission spectroscopy becomes suitable for use in clinical applications.

While the invention has been described with respect to a preferred physical embodiment constructed in accordance therewith, it will be apparent to those skilled in the art that various modifications and improvements may be made without departing from the scope and spirit of the invention. Accordingly, it is to be understood that the invention is not to be limited by the specific illustrative embodiment, but only by the scope of the appended claims.

**Claims**

1. A method of introducing nitrogen into the microwave cavity (16) of a flameless emission spectrometer used to analyse a sample which spectrometer has a heatable element (35) upstream of the microwave cavity (16), the method being characterised by:

dissolving in a suitable diluent a compound which is capable of releasing nitrogen at high temperature and low pressure; and

aspirating said diluent with said compound therein onto said heatable element (35) to generate nitrogen.

2. The method of claim 1, wherein said compound is selected from the group consisting of hydrazine and urea and their related families of compounds.

3. The method of claim 1 or 2, further comprising:

dissolving said sample in said diluent for aspiration of said sample into said chamber with said diluent and said compound.

4. The method of claim 1, wherein said compound is water soluble.

5. The method of any preceding claim wherein said aspirating step comprises aspirating said diluent into said microwave cavity.

6. A system for analyzing the composition of a sample wherein the sample components are excited through collision with active metastable nitrogen, the excited sample components emitting a characteristic wavelength of light which may be detected, said system including a chamber (15) through which nitrogen flows, a microwave cavity (16) coupled to said chamber, and a microwave source (17) coupled to said cavity, said source and said cavity exciting the nitrogen, means for introducing the nitrogen into said chamber by the method of claim 1 and comprising:

a heatable element (35) positioned within said chamber (15), upstream of said microwave cavity (16); characterised by: means (31, 37, 32, 33) for aspirating a diluent into said chamber (15) and onto said heatable element (35) said diluent having dissolved therein a compound which is capable of releasing nitrogen at high temperatures and low pressure.

7. The system according to claim 6, wherein said diluent further has dissolved therein said sample.

8. The system according to claim 6 or 7, wherein said compound is selected from the group consisting of hydrazine and urea and their related families of compounds.

9. The system according to claim 6 or 7, wherein said aspirating means comprises:

a capillary tube (33), one end of said capillary tube extending into said chamber; and

means (32) for conducting said diluent into the other end of said capillary tube.

10. The system according to claim 9, wherein said aspirating means further comprises means (37) for pumping said diluent continuously into said other end of said capillary tube.

**Patentansprüche**

1. Eine Methode zur Einführung von Stickstoff in den Mikrowellenhohlleiter (16) eines flammenfreien Emissions-Spektrometers, das zur Analyse einer Probe eingesetzt wird, wobei das Spektrometer ein Heizelement (35) enthält, das vor dem Mikrowellenhohlleiter angebracht ist, wobei die Methode dadurch gekennzeichnet ist, daß

eine Verbindung, die bei hohen Temperaturen und niedrigen Drücken Stickstoff abgibt, in einem geeigneten Lösungsmittel gelöst wird; und daß

das genannte Lösungsmittel zusammen mit der genannten Verbindung zur Produktion von Stickstoff auf das genannte Heizelement (35) angesaugt wird.

2. Die Methode nach Anspruch 1, wobei die genannte Verbindung aus der von Hydrazin and Harnstoff und den dazugehörigen Familien gebildeten Gruppe von Verbindungen stammt.

3. Die Methode nach Anspruch 1 oder 2, die des weiteren enthält:

daß die genannte Probe in genannten Lösungsmittel gelöst wird, so daß die genannte Probe zusammen mit dem genannte Lösungsmittel und der genannten Verbindung in den genannte Hohlleiter angesaugt wird.

4. Die Methode nach Anspruch 1, wobei die genannte Verbindung wasserlöslich ist.

5. Die Methode nach einem beliebigen vorangegangenen Anspruch, wobei die Ansaugstufe daraus besteht, daß das besagte Lösungsmittel in den besagten Mikrowellenhohlleiter angesaugt wird.

6. Ein System zur Analyse der Zusammensetzung einer Probe, wobei die Bestandteile durch Kollision mit aktivem metastabilem Stickstoff angeregt werden, die angeregten Bestandteile der Probe Licht in einer charakteristischen Wellenlänge aussenden, das meßbar ist, wobei das besagte System eine Kammer (15) enthält, durch die Stickstoff fließt, des weiteren einen an diese Kammer gekoppelten Mikrowellenhohlleiter (16), eine an diesen Hohlleiter gekoppette Mikrowellenquelle (17), wobei die besagte Quelle und der besagte Hohlleiter Stickstoff in einen angeregten Zustand versetzen, des weiteren ein Element, das nach der in Anspruch 1 beschriebenen Methode Stickstoff in besagte Kammer einführt und besteht aus:

einem in besagter Kammer (15) befindlichen Heiz-element (35), das sich vor dem Mikrowellenhohlleiter (16) befindet; charakterisiert durch:

ein Element (31, 37, 32, 33), das das Ansaugen eines Lösungsmittels in besagte Kammer (15) und auf das besagte Heizelement (35) besorgt, wobei das besagte Lösungsmittel in Lösung eine Verbindung enthält, die bei hohen Temperaturen und neidrigen Drücken Stickstoff abgibt.

7. Das System nach Anspruch 6, wobei das besagte Lösungsmittel außerdem die besagte Probe in Lösung enthält.

8. Das System nach Anspruch 6 oder 7, wobei die besagte Verbindung aus der Gruppe ausgewählt wird, die aus Hydrazin, Harnstoff und den dazugehörigen Familien von Verbindungen besteht.

9. Das System nach Anspruch 6 oder 7, wobei das besagte Ansaugsystem sich zusammensetzt aus:

einer Kapillare (33), wobei ein Ende der Kapillare in die besagte Kammer ragt; und

einem Element (32) zur Leitung des besagten Lösungsmittels zum anderen Ende der besagten Kapillare.

10. Das System nach Anspruch 9, wobei das besagte Ansaugsystem des weiteren ein Element (37) zum kontinuierlichen Pumpen des besagten Lösungsmittels in das besagte andere Ende des besagten Elements zum Einführen der Probe umfaßt:

ein Pumpelement, das das besagte Lösungsmittel kontinuierlich zum besagten anderen Ende der besagten Kapillare pumpt.

**Revendications**

1. Une méthode pour introduire le nitrogène dans la cavité à micro-ondes (16) d'un spectromètre à émission sans flamme, utilisé pour l'analyse d'un échantillon, lequel spectromètre a un élément chauffant (35) en amont de la cavité à micro-ondes (16), laquelle méthode se caractérise par:

la dissolution dans un diluant approprié d'un composé capable de libérer du nitrogène à haute température et à basse pression; et

l'aspiration dudit diluant avec ledit composé sur l'élément chauffant (35) pour produire le nitrogène.

2. La méthode selon la revendication 1, dans laquelle ledit composé est sélectionné dans le groupe constitué d'hydrazine, d'urée et des familles de composés apparentées.

3. La méthode selon la revendication 1 ou 2, qui comprend en plus:

la dissolution dudit échantillon dans ledit diluant qui permet l'aspiration dudit échantillon dans ladite chambre avec ledit diluant et ledit composé.

4. La méthode selon la revendication 1, dans laquelle ledit composé est soluble dans l'eau.

5. La méthode selon l'une quelconque des revendications précédentes, dans laquelle l'étape de l'aspiration comprend l'aspiration dudit diluant dans ladite cavité à micro-ondes.

6. Un système pour analyser la composition d'un échantillon dans lequel les composants sont excités par la rencontre avec du nitrogène métastable actif, les composants de l'échantillon excités émettant une longueur d'ondes lumineuse caractéristique qui peut être détectée, ledit système comportant une chambre (15) que le nitrogène traverse, une cavité à micro-ondes (16) associée à ladite chambre et une source de micro-ondes (17) associée à ladite cavité, ladite source et ladite cavité excitant le nitrogène, comportant aussi des dispositifs pour introduire le nitrogène dans ladite chambre par la méthode de la revendication 1 et comprenant:

un élément chauffant (35) qui se trouve dans ladite chambre (15), en amont de ladite cavité à micro-ondes (16); caractérisé par:

les dispositifs (31, 37, 32, 33) pour l'aspiration d'un diluant dans ladite chambre (15) et sur l'élément chauffant (35) ledit diluant ayant dissous en cet endroit un composé qui est capable de libérer du nitrogène à haute température et à basse pression.

7. Le système selon la revendication 6, dans lequel ledit diluant a dissous en cet endroit ledit échantillon.

8. Le système selon les revendications 6 ou 7, dans lequel ledit composé est selectionné dans le groupe constitué d'hydrazine, d'urée et des familles de composés apparentées.

9. Le système selon la revendication 6 ou 7, dans lequel le dispositif d'aspiration comprend:

un tube capillaire (33), une extrémité dudit tube capillaire se prolongeant dans ladite chambre; et

les dispositifs (32) pour amener ledit diluant dans l'autre extrémité dudit tube capillaire.

10. Le système selon la revendication 9, dans lequel ledit dispositif d'aspiration comprend en plus le dispositif (37) pour pomper continuellement ledit diluant dans l'autre extrémité dudit dispositif d'amenée du corps et dans lequel ledit dispositif d'aspiration comprend en plus:

un dispositif pour pomper continuellement ledit diluant vers ladite autre extrémité dudit tube capillaire.

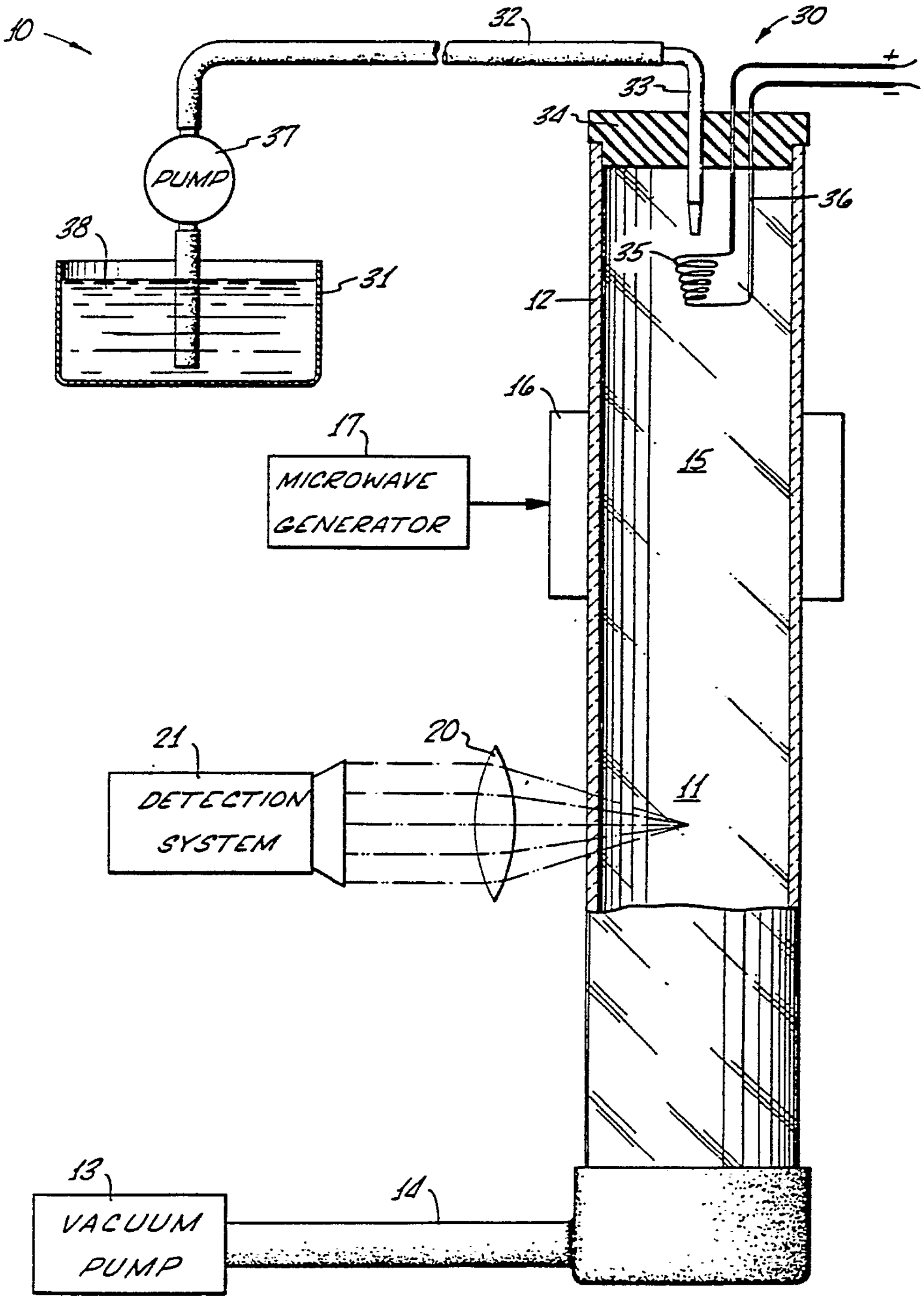
10
32
30
+
−
33
34
37
PUMP
36
38
35
31
12
16
17
MICROWAVE
GENERATOR
15
21
20
DETECTION
SYSTEM
11
13
14
VACUUM
PUMP